# EUROPÄISCHE PATENTSCHRIFT

(11) **EP 0 528 338 B1**
(45) Veröffentlichungstag und Bekanntmachung des Hinweises auf die Patenterteilung: **24.04.1996**
(21) Anmeldenummer: 92113708.9
(22) Anmeldetag: 12.08.1992
(51) Int. Cl.: G02B 13/08

(54) **Anamorphotischer Vorsatz für ein Projektions-Grundobjektiv**
Anamorphotic front lens attachment for a projection objective
Anamorphoseur pour un objectif de projection de base

(30) Priorität: 17.08.1991 DE 4127255
(43) Veröffentlichungstag der Anmeldung: 24.02.1993
(73) Patentinhaber: Jos. Schneider Optische Werke Kreuznach GmbH & Co. KG, D-55543 Bad Kreuznach (DE)
(72) Erfinder: Körpert, Heinz, Ing. (FH), W-6550 Bad Kreuznach (DE); Linn, Ralf, Dipl.-Ing. (FH), W-6761 Niedermoschel (DE)
(74) Vertreter: Beckensträter, Margarethe Rechtsanwältin

(56) Entgegenhaltungen:
- DE-A- 3 629 438
- PATENT ABSTRACTS OF JAPAN vol. 15, no. 156 (P-1192) 18. April 1991 ; & JP-A-30 25 407

## Beschreibung

Die Erfindung betrifft einen anamorphotischen Vorsatz für ein Projektions-Grundobjektiv nach dem Oberbegriff des Anspruchs 1.

Anamorphotische Vorsätze für Projektions-Grundobjektive bestehend aus vier oder mehr Zylinderlinsen in zwei oder mehr Gliedern mit einem in der Regel zweifachen anamorphotischen Faktor sind bekannt. Es ist weiterhin bekannt, daß eines der Glieder die vordere, zum Zwecke der Fokussierung axial bewegbare optische Wirkungsgruppe ist, während ein anderes der Glieder die hintere, ortsfeste Wirkungsgruppe ist. Die Linsen nutzen optisch in der Horizontalen kleinere Dimensionen als in der Vertikalen.

Bekannte anamorphotische Vorsätze zur Wiedergabe von anamorphotisch aufgenommenen Filmen, z.B. 35 mm - Cinema-Scope-Filmen, bauen verhältnismäßig aufwendig und weisen auch verhältnismäßig große Außenabmessungen auf. Die Außendurchmesser der Grundobjektive und die Außendurchmesser der anamorphotischen Vorsätze im Bereich ihres Anschlusses an das Grundobjektiv sind meist fest vorgegeben; für Kinoprojektoren sind die Durchmesser sogar genormt. Die bekannten anamorphotischen Vorsätze erweitern sich daher von ihrem hinteren zylindrischen Aufbau zur Frontseite des Vorsatzes hin um weitere zylindrische Bereiche. Das macht sie für den Projektorenbauer ebenso wie für den Anwender, die Bedienungsperson des Projektionsgeräts, unhandlich. Es sind andererseits aber auch anamorphotische Vorsätze in handlicherer Ausführung bekannt, deren äußere Abmessungen kleiner sind und bei denen deren optisches System als im wesentlichen in einem zylindrischen Körper untergebracht erscheint vgl. z.B. DE-A-36 29 438. Derartige Vorsätze kleinerer Abmessungen konnten wegen der beschränkten räumlichen Möglichkeiten zur Unterbringung des Verstellmechanismus' aber nicht die gleichen optischen Eigenschaften aufweisen wie jene Vorsätze größerer Abmessungen.

Aufgabe der Erfindung ist es daher, einen anamorphotischen Vorsatz für ein Projektions-Grundobjektiv zu schaffen, mit dem bei vorgegebenen unveränderten kleinen Außenabmessungen eine deutlich höhere Abbildungsleistung erzielt wird und bei dem die Mittel zur Erzielung der höheren Abbildungsleistung in den Vorsatz integriert sind.

Erfindungsgemäß wird dies erreicht durch die Merkmale des Patentanspruchs 1. Vorteilhafte Weiterbildungen des Erfindungsgedankens ergeben sich aus den Unteransprüchen.

Durch die Verlegung der Mittel zur Verschiebung der inneren zylindrischen Fassung in der äußeren zylindrischen Fassung in einen seitlichen, insbesondere in einen der äußersten seitlichen Bereiche der inneren zylindrischen Fassung in der Horizontalen und durch deren Anordnung in dem vorbezeichneten Bereich in axialer Erstreckung darin benötigen die Mittel einerseits einen geringen Raum quer zur optischen Achse des Vorsatzes, während andererseits der dort in Achsrichtung zur Verfügung stehende Raum nahezu über die gesamte Länge des Vorsatzes genutzt werden kann. Dabei wird erfindungsgemäß zugleich der Umstand genutzt, daß die Linsen eines anamorphotischen Vorsatzes nicht kreisrund sein müssen, sondern daß ihr Durchmesser in der Horizontalen geringer sein kann als in der Vertikalen. Dies ermöglicht andererseits den Einbau von Linsen mit größerem Durchmesser in der Vertikalen; denn durch die Verlegung der Mittel zur Verschiebung der inneren zylindrischen Fassung in der äußeren zylindrischen Fassung in den oben bezeichneten äußersten seitlichen Bereich in der Horizontalen kann die innere zylindrische Fassung in ihren übrigen Bereichen frei von Verstellmitteln (wie Zylinderringen, die über Schneckengewinde die innere Fassung verstellen) gehalten werden. Durch die so ermöglichte Vergrößerung des Linsendurchmessers in der Vertikalen wird eine deutliche Verringerung der Komafehler und damit eine Verbesserung der Abbildungsleistung insbesondere in den Bildecken erreicht, so daß mit dem erfindungsgemäßen anamorphotischen Vorsatz Abbildungsleistungen erzielt werden, die bisher nur mit anamorphotischen Vorsätzen aufwendigerer Bauweise bzw. größerer Dimensionen erzielt werden konnten.

Die Mittel zur Verschiebung der inneren Fassung in der äußeren Fassung sind vorteilhaft ein Zug-Schub-Trieb, insbesondere ein Schraubtrieb, wobei in einer praxisnahen Ausführungsform einer Verschiebung mittels einer aus Schraube und Mutter bestehenden Anordnung der Vorzug zu geben sein wird. Dabei können deren Außenbzw. Innengewinde schwergängig ausgebildet sein, damit die innere Fassung ihre einmal gewählte Fokussierposition in der äußeren Fassung während des gesamten Projektionsvorgangs und auch während folgender Projektionsvorgänge beibehält.

Vorteilhaft kann aber auch eine gesonderte Arretiervorrichtung zur Arretierung der gewählten Fokussierposition der inneren Fassung gegen die äußere Fassung vorgesehen sein, wobei zweckmäßig wiederum eine aus einer Schraube und einer Mutter bestehende Anordnung gewählt wird, wobei die Mutter zugleich derart ausgebildet ist, daß sie eine kraftschlüssige Verbindung zwischen innerer Fassung und äußerer Fassung herbeiführt.

Vorteilhaft platzsparend und vorhandenen Raum ausnutzend sind weiterhin die Mittel zur Verschiebung der inneren Fassung in der äußeren Fassung und die Arretiervorrichtung einander diametral gegenüberliegend jeweils in einem der oben bezeichneten äußersten seitlichen Bereiche der inneren und gegebenfalls der äußeren Fassung in der Horizontalen angeordnet, wo sie leicht zugänglich von der Frontseite des Vorsatzes bedienbar sind.

Die Einstellung des Vorsatzes auf die gewünschte Fokussierposition wird erleichtert durch eine an der äußeren Fassung vorgesehene Entfernungsskala.

Dadurch, daß die innere Fassung 3 über ihre größtmögliche Länge in der äußeren Fassung 4 geführt wird, wird das bestmögliche Führungsverhältnis (Führungsdurchmesser: Führungslänge) erreicht, womit Kippeffekte weitestgehend vermieden und die mechanisch-optischen Übertragungseigenschaften wesentlich verbessert sind.

Die vordere optische Wirkungsgruppe und die hintere optische Wirkungsgruppe sind vorteilhaft durch elastische Flanschverbindungen an der inneren bzw. an der äußeren Fassung gehaltert, wodurch beim Projektionsvorgang auftretende thermische Ausdehnungen in den Linsen und Fassungen ausgeglichen werden, so daß die gleichbleibende Qualität der Abbildungsleistung gewährleistet ist.

Weitere Merkmale, Einzelheiten und Vorteile der Erfindung ergeben sich aus der nachfolgenden Beschreibung von Ausführungsbeispielen anhand der anhängenden Zeichnung. Darin zeigen:
- Fig. 1: einen erfindungsgemäßen anamorphotischen Vorsatz für ein Projektions-Grundobjektiv im horizontalen Längsschnitt in Draufsicht, dargestellt im Maßstab von annähernd 1,5 : 1,
- Fig. 2: eine Frontansicht des erfindungsgemäßen anamorphotischen Vorsatzes (von der Projektionswand her gesehen),
- Fig. 3: einen Teilquerschnitt durch den anamorphotischen Vorsatz in der Schnittebene A-B gemäß Fig. 1 mit der Gewindemutter für die Bewegungsschraube,
- Fig. 4: einen Teilquerschnitt durch den anamorphotischen Vorsatz in der Schnittebene C-D gemäß Fig. 1 mit der Arretierschraube und dem Klemmstück,und
- Fig. 5: in seitlicher Ansicht einen teilweisen Längsschnitt durch den anamorphotischen Vorsatz, der den vorderen, zur Projektionswand gerichteten Teil des Vorsatzes veranschaulicht,
- Fig. 6: einen Teilausschnitt des anamorphotischen Vorsatzes gemäß Fig. 1 im Bereich der Arretierschraube mit einer Variation des Klemmstücks und
- Fig. 7: einen Teilquerschnitt durch den anamorphotischen Vorsatz in der Schnittebene C-D gemäß Fig. 6.

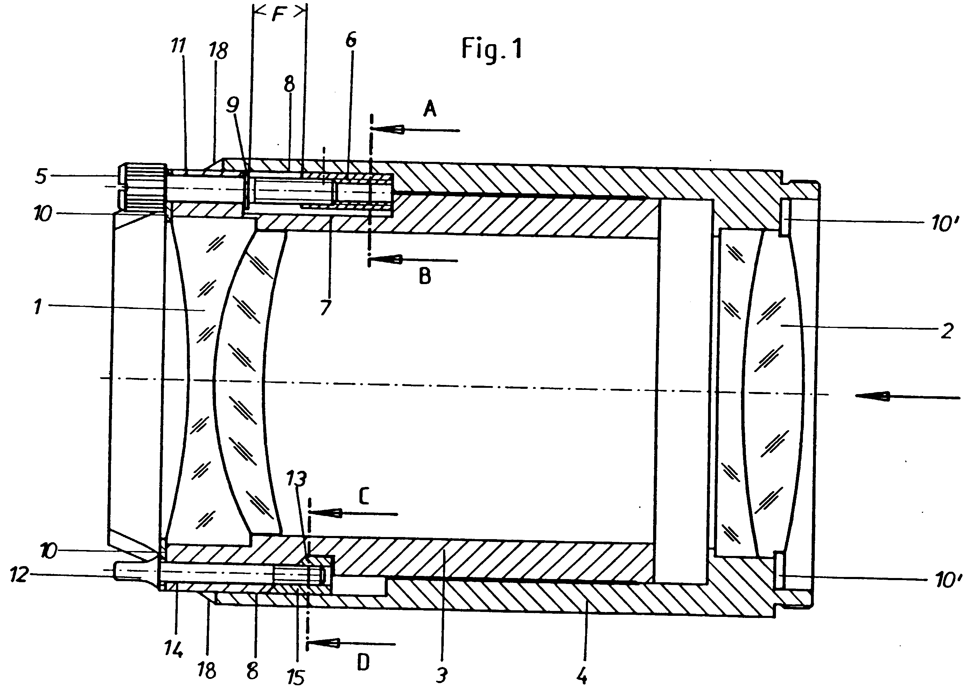

In Fig. 1 gibt der Pfeil rechts gemäß Zeichnung die Lichtrichtung vom Projektionsgerät, durch das Grundobjektiv (nicht dargestellt) und durch den dargestellten anamorphotischen Vorsatz zur Projektionswand (nicht dargestellt) an. Mit 1 ist die - von der Projektionswand her gesehen - vordere, aus zwei Zylinderlinsen, die miteinander verkittet sein können, bestehende optische Wirkungsgruppe und mit 2 die hintere, ebenfalls aus zwei Zylinderlinsen, die miteinander verkittet sein können, bestehende optische Wirkungsgruppe bezeichnet. Die vordere optische Wirkungsgruppe 1 ist in bekannter Weise in einer inneren (hohl-)zylindrischen Fassung 3 gelagert. Die hintere optische Wirkungsgruppe 2 ist ebenfalls in bekannter Weise in einer äußeren (hohl-)zylindrischen Fassung 4 gelagert, die ortsfest am Grundobjektiv angekoppelt ist und den Tubus des anamorphotischen Vorsatzes bildet. Der Außendurchmesser der inneren Fassung 3 und der Innendurchmesser der äußeren Fassung 4 sind wenigstens teilweise derart gewählt, daß die innere Fassung 3 in der äußeren Fassung 4 axial formschlüssig teleskopartig verschiebbar ist.

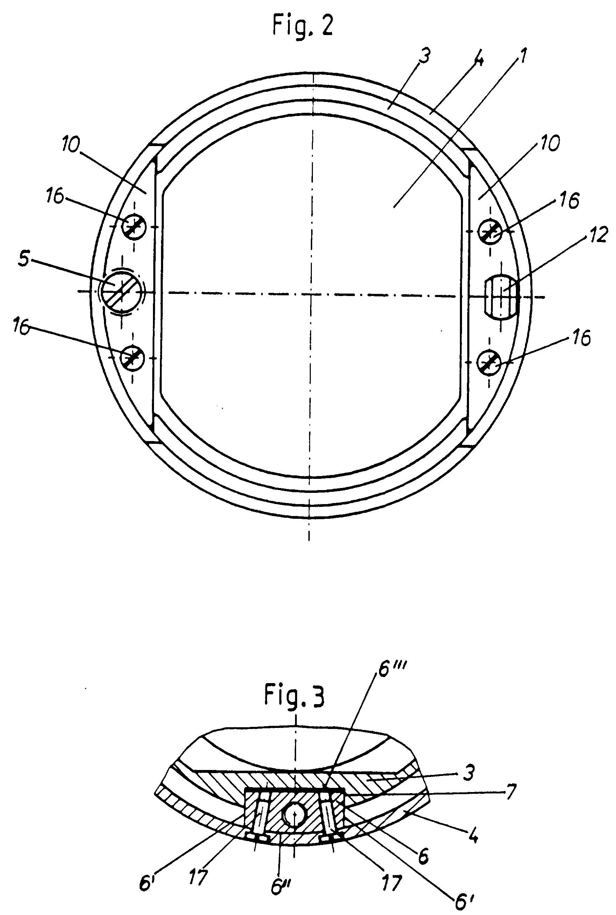

Im gemäß Zeichnung der Fig. 1 oberen Bereich des anamorphotischen Vorsatzes ist die Bewegungsschraube 5 sichtbar. Diese ragt gemäß Zeichnung von ihrer Schaftmitte bis zum hinteren Schaftende in einen Raum zwischen innerer Fassung 3 und äußerer Fassung 4, der durch eine äußere Ausnehmung 7 der inneren Fassung 3 und eine konzentrische rotationssymmetrische innere Ausdrehung 8 der äußeren Fassung 4 in deren (3, 4) vorderem Bereich gebildet wird. Im mittleren Bereich ihres Schafts ist die Bewegungsschraube 5 innerhalb des anamorphotischen Vorsatzes mittels eines Sicherungsrings 9 axial an dem vorderen Ende bzw. der vorderen Wand des Raums 6, 7 an der inneren Fassung 3 befestigt, während die Bewegungsschraube 5 außerhalb des anamorphotischen Vorsatzes mit ihrem Kopf auf einem der beiden Linsenhalterungsteile 10 an der inneren Fassung 3 anliegt, die jeweils ein kreisscheibensegmentförmiges elastisches Aluminiumblech- oder Kunststoffteil sein können, wie Fig. 2 in Ansicht zeigt, und die, wie aus Fig. 1 und Fig. 2 ersichtlich ist, an der vorderen Stirnseite der inneren Fassung 3 befestigt sind und jeweils einen äußeren Bereich der vorderen Linse der vorderen optischen Wirkungsgruppe 1 von vorn her übergreifen und somit deren axialer Halterung dienen. Die Bewegungsschraube 5 ist mit dem Außengewinde ihres Schafts teilweise in die Gewindemutter 6 bzw. deren Innengewinde eingeschraubt, die ihrerseits in dem durch die äußere Ausnehmung 7 der inneren Fassung 3 und durch die innere Ausdrehung 8 der äußeren Fassung 4 gebildeten Raum gelagert und an der äußeren Fassung 4 befestigt ist. Durch entsprechende Betätigung (Verdrehen) der Bewegungsschraube 5 schraubt sich diese in die Gewindemut.ter 6 tiefer ein oder aus dieser heraus, wobei sich die innere Fassung 3 parallel zur optischen Achse des Vorsatzes teleskopartig in die äußere Fassung 4 hinein bzw. aus ihr heraus verschiebt. Dabei ist in der in Fig. 1 dargestellten vordersten Position der inneren Fassung 3 deren Bewegung begrenzt, indem die hintere Wand der Ausnehmung 7 in der inneren Fassung 3 axial gegen die dortige hintere Stirnfläche der Gewindemutter 6 anschlägt, wie in Fig. 1 gezeigt. In der hintersten Position der inneren Fassung 3 wird deren Axialbewegung begrenzt, indem der Sicherungsring 9 an der Bewegungsschraube 5 auf die vordere Stirnfläche der Gewindemutter 6 aufläuft. Der aus Fig. 1 ersichtliche Abstand F zwischen Sicherungsring 9 und vorderer Stirnfläche der Gewindemutter 6 ist der Bewegungshub der inneren Fassung 3 zwischen deren vorderster und deren hinterster Position.

Der Sicherungsring 9 ist vorzugsweise ringscheibenförmig ausgebildet und sitztmit seinem inneren Bereich in einer Ringnut im mittleren Bereich des Schafts der Bewegungsschraube 5. Zwischen Kopf und mittlerem Bereich des Schafts ist der Schaft der Bewegungsschraube 5 formschlüssig in einer axialen Bohrung 11 der inneren Fassung 3 gelagert.

Auch in ihrer in Fig. 1 gezeigten vordersten Position ragt die inneren Fassung 3 nicht über die äußere Fassung 4 nach vorn heraus, so daß die maximale axiale Länge des anamorphotischen Vorsatzes nur durch die äußere Fassung 4 bestimmt wird. Aus Fig. 1 ist ferner ersichtlich, daß im vorderen Bereich zwischen Vorderseite der inneren Fassung 3 und der jeweils vorderen Wand der Ausnehmungen 7 und 13 in der inneren Fassung 3 der Außendurchmesser der inneren Fassung 3 vergrößert und derart dem Innendurchmesser der an der Vorderseite der äußeren Fassung 4 beginnenden konzentrischen rotationssymmetrischen Ausdrehung 8 der äußeren Fassung 4 angepaßt ist, daß auch in diesem Bereich die innere Fassung 3 axial formschlüssig teleskopartig in der äußeren Fassung 4 verschiebbar ist.

Die hintere optische Wirkungsgruppe 2 weist ebenfalls ein ringscheibenförmiges oder zwei äußere Linsenhalterungsteil(e) 10' entsprechend den elastischen Linsenhalterungsteilen 10 an der vorderen optischen Wirkungsgruppe 1 auf, die an der hinteren Stirnseite der äußeren Fassung 4 befestigt sind.

Im gemäß Zeichnung der Fig. 1 unteren Bereich des anamorphotischen Vorsatzes ist die Arretierschraube 12 sichtbar, die mit ihrem Schaft durch eine formschlüssige axiale Bohrung 14 in der inneren Fassung 3 in einen Raum ragt, der durch eine äußere Ausnehmung 13 der inneren Fassung 3 in deren vorderem Bereich und die konzentrische innere Ausdrehung 8 der äußeren Fassung 4 gebildet wird. Der Schaft der Arretierschraube 12 weist ein Außengewinde auf, auf dem in dem vorerwähnten Raum ein Klemmstück 15 mit einem Innengewinde aufsitzt. Das Klemmstück 15 kann ein segmentförmiges Gewindemutterteil sein. Dabei ist die vordere Stirnfläche des Klemmstücks 15 zur Richtung der optischen Achse des anamorphotischen Vorsatzes geneigt und liegt mit dieser Schrägfläche an einer entsprechenden Schrägfläche bzw. abgeschrägten Wand des vorderen Endes der äußeren Ausnehmung 13 der inneren Fassung 3 an, und zwar radial mit etwas Spiel zur inneren Fassung 3 und zur äußeren Fassung 4, solange die innere Fassung 3 nicht mittels der Arretierschraube 12 und des Klemmstücks 15 gegen die äußere Fassung 4 arretiert ist. Soll die innere Fassung 3 in einer bestimmten Position der inneren Fassung 3 zur äußeren Fassung 4 arretiert werden, wird die Arretierschraube 12 mittels Drehens an ihrem Kopf betätigt, so daß sich der Schaft der Arretierschraube 12 mit seinem Außengewinde tiefer in das Innengewinde des Klemmstücks 15 einschraubt und dadurch das Klemmstück gegen die abgeschrägte vordere Wand der äußeren Ausnehmung 13 der inneren Fassung 3 und gegen die radiale Wand der inneren Ausdrehung 8 der äußeren Fassung 4 zwingt, wobei das Klemmstück 15 nach Art eines Keils eine kraftschlüssige Verbindung zwischen innerer Fassung 3 und äußerer Fassung 4 herstellt, so daß schließlich innere Fassung 3 und äußere Fassung 4 fest gegeneinander arretiert sind.

Soll das Projektionsgerät in Betrieb genommen werden, wird also zunächst mittels der Bewegungsschraube 5 die innere Fassung 3 gegenüber der äußeren Fassung 4 in die bei dem vorhandenen Abstand des Projektionsgeräts zur Projektionswand günstigste Fokussierposition gefahren, und in dieser wird sodann die innere Fassung 3 mittels der Arretierschraube 12 nebst Klemmstück 15 gegen die äußere Fassung 4 arretiert, so daß während des gesamten Projektionsvorgangs die gewählte Fokussierposition gewahrt bleibt.

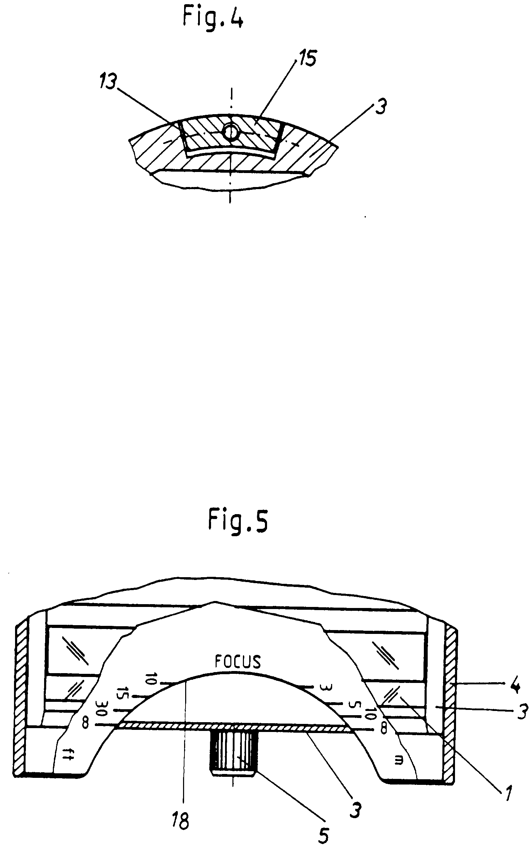

Mit der Bezugszahl 18 sind seitliche Ausnehmungen an der Frontseite der äußeren Fassung 4 bezeichnet, auf die anhand der Fig. 5 noch näher eingegangen wird.

Fig. 2 ist eine Frontansicht des erfindungsgemäßen anamorphotischen Vorsatzes von der Projektionswand her gesehen. Sie zeigt die Anordnung der Bewegungsschraube 5 und der Arretierschraube 12 einander in der Horizontalen diametral gegenüberliegend in den äußersten seitlichen Randbereichen des anamorphotischen Vorsatzes. Dabei sind der Kopf der Bewegungsschraube 5 und der Kopf oder das Bedienungsteil der Arretierschraube 12 sichtbar. Die Bezugszahl 10 ist jeweils eines der beiden äußeren Linsenhalterungsteile, die mit Schrauben 16 am Körper der inneren Linsenfassung 3 befestigt sind. Die Bezugszahl 1 weist auf die vordere Linse der vorderen optischen Wirkungsgruppe 1. Aus der Frontansicht der Fig. 2 ist ersichtlich, daß die Linsen der vorderen optischen Wirkungsgruppe 1 (wie auch die Linsen der hinteren optischen Wirkungsgruppe 2) in der Vertikalen größer dimensioniert sind als in der Horizontalen.

Fig. 3 zeigt eine Einzelheit des erfindungsgemäßen anamorphotischen Vorsatzes im Querschnitt gemäß Schnitt A-B in Fig. 1, nämlich ein Ausführungsbeispiel der Gewindemutter 6, die mittels Schrauben 17 an der äußeren Fassung 4 befestigt ist, in die äußere Ausnehmung 7 der inneren Fassung 3 ragt und in deren mittige Gewindebohrung die Bewegungsschraube 5 (Fig. 1) eingreift. Die Gewindemutter 6 weist im Querschnitt zwei paralle Flächen 6' auf und liegt mit ihrer der äußeren Fassung 4 zugewandten zylindrischen Fläche 6'' an der äußeren Fassung 4 an. Die dieser gegenüberliegende ebene Fläche 6''' ragt frei in die Ausnehmung 7 der inneren Fassung 3.

Fig. 4 zeigt eine weitere Einzelheit des erfindungsgemäßen anamorphotischen Vorsatzes im Querschnitt gemäß Schnitt C-D gemäß Fig. 1, nämlich ein Ausführungsbeispiel des Klemmstücks 15 in der äußeren Ausnehmung 13 der inneren Fassung 3 des Vorsatzes. In die mittige Gewindebohrung des im Querschnitt als Kreisringsektor ausgebildeten Klemmstücks 15 greift die Arretierschraube 12 (Fig. 1) ein.

Fig. 5 zeigt in seitlicher Ansicht von der Arretierschraube 12 zu der diametral gegenüberliegenden Bewegungsschraube 5 eine Teilansicht sowie einen teilweisen Längsschnitt durch den vorderen zur Projektionswand gerichteten Bereich des erfindungsgemäßen anamorphotischen Vorsatzes. Darin sind wieder 5 die Bewegungsschraube (d.h. hier deren Kopf), 4 die äußere Fassung, 3 die innere Fassung und 1 die vordere optische Wirkungsgruppe. Mit der Bezugszahl 18 ist eine zu Fig. 1 schon erwähnte, gegenüber dem äußersten vorderen Ende der äußeren Fassung 4 an dessen Umfang je (beidseitig) in der Horizontalen vorgesehene konkave Ausnehmung 18 bezeichnet. Im Bereich dieser Ausnehmungen 18 kann als Einstellhilfe auf der Außenseite der äußeren Fassung 4 eine wie in Fig. 5 dargestellte Skala vorgesehen sein, welche die jeweilige Fokussierposition der inneren Fassung 3 (in ihrer Stellung gegenüber der äußeren Fassung 4) markiert, und zwar, wie im Ausführungbeispiel gemäß Fig. 5 veranschaulicht, in Positionen zwischen 3 Metern und Unendlich und 10 Fuß und Unendlich, wobei in Fig. 5 die Einstellung auf Unendlich gezeigt ist. Durch die beidseitig in der Horizontalen im Bereich des Kopfes der Bewegungsschraube 5 und der Arretierschraube 12 vorgesehenen konkaven Ausnehmungen 18 in Achsrichtung am Umfang der Vorderseite der äußeren Fassung 4 sind einmal der Kopf der Bewegungsschraube 5 und der Kopf der Arretierschraube 12 auch in der hintersten Position der inneren Fassung 3 in der äußeren Fassung 4 für die Bedienungsperson noch leicht betätigbar; durch diese konkaven Ausnehmungen 18 wird aber auch für die Bedienungsperson die eingestellte Fokussierposition der inneren Fassung 3 (gegenüber der äußeren Fassung 4) leicht sichtbar, was insbesondere unterstützt und erleichtert wird durch die Anbringung der Entfernungs-Skala in Metern bzw. Fuß. Die Bedienungsperson kann hierdurch mittels der Bewegungsschraube 5 die Fokussierung zunächst schnell auf die voreingeschätzte Entfernung vornehmen und dann entsprechend der tatsächlich vorhandenen Entfernung mittels der Bewegungsschraube 5 die erforderliche Feineinstellung der Fokussierung vornehmen.

Fig. 5 veranschaulicht auch, daß die innere Fassung 3 sogar in der Fokussierposition Unendlich nicht nach vorn aus der äußeren Fassung 4 heraustritt, so daß auch in dieser Position die äußeren Abmessungen des anamorphotischen Vorsatzes in seiner axialen Länge gewahrt bleiben und zugleich die axial verschiebbare innere Fassung 3 mit der vorderen optischen Wirkungsgruppe 1 gegen äußere Einflüsse wie Stoß oder Schlag durch die äußere Fassung 4 geschützt gelagert ist.

Da, wie aus Fig. 2 ersichtlich ist, die Linsen der optischen Wirkungsgruppen in der Horizontalen kleiner dimensioniert sind als in der Vertikalen, wird erfindungsgemäß der horizontal-seitliche Bereich des anamorphotischen Vorsatzes genutzt, um darin beiderseits der optischen Achse die Mittel zur Herbeiführung der Bewegung der inneren Fassung 3 in der äußeren Fassung 4, nämlich die Bewegungsschraube 5 und die Gewindemutter 6, und die Mittel zur Arretierung der inneren Fassung 3 an der äußeren Fassung 4 in einer bestimmten Fokussierposition, nämlich die Arretierschraube 12 und das Klemmstück 15, unterzubringen, und zwar in den äußersten horizontal-seitlichen Bereichen neben den Linsen der vorderen optischen Wirkungsgruppe 1 innerhalb der inneren 3 und äußeren Fassung 4 des Vorsatzes wie insbesondere zu Fig. 1 und Fig. 2 beschrieben. Die Mittel zur Bewegung und Arretierung der inneren Fassung 3 in bzw. an der äußeren Fassung 4 sind daher axial in der inneren 3 und äußeren Fassung 4 und nicht etwa von dieser abragend außerhalb der äußeren Fassung 4 an deren radialem Außenumfang unter- bzw. angebracht. Die einander diametral gegenüberliegende Anordnung einerseits der Bewegungsschraube 5 und der Gewindemutter 6 sowie andererseits der Arretierschraube 12 und des Klemmstücks 15 jeweils in einem äußersten Bereich in der Horizontalen seitlich der vorderen optischen Wirkungsgruppe 1 verteilt die Mittel zur Bewegung und zur Arretierung der inneren Fassung 3 in bzw. an der äußeren Fassung 4 sinnvoll in einfacher und ihre Funktion nicht beeinträchtigender Unterbringung auf die in der Horizontalen beiderseits neben der vorderen optischen Wirkungsgruppe 1 beschränkt zur Verfügung stehenden Bereiche der inneren 3 und äußeren Fassung 4 und nutzt diese optimal aus.

Bei dieser Anordnung sichern außerdem die elastischen Linsenhalterungsteile 10 und 10' (vgl. Fig. 1 und Fig. 2) die Position der vorderen 1 bzw. der hinteren optischen Wirkungsgruppe 2 in der inneren 3 bzw. äußeren Fassung 4, während die an der äußeren Fassung 4 befestigte und in die äußere Ausnehmung 7 der inneren Fassung 3 ragende Gewindemutter 6 (vgl. Fig. 1 und Fig. 3) den gleichbleibenden Sitz der inneren Fassung 3 in der äußeren Fassung 4 gewährleistet, indem sie eine rotatorische Drehbewegung der inneren Fassung 3 in der äußeren Fassung 4 verhindert, so daß auch die vorgegebene Position der vorderen optischen Wirkungsgruppe 1 in der Horizontalen und in der Vertikalen gesichert ist und Abbildungsfehler durch deren unkontrollierte azimutale Bewegungen und Verschiebungen vermieden werden. Im Ausführungsbeispiel gemäß Fig. 1 und Fig. 3 weist dabei die Gewindemutter 6 im Querschnitt zwei parallele Flächen auf, während die äußere Ausnehmung 7 der inneren Fassung 3 derart entsprechend ausgeformt ist, daß ein formschlüssiger Sitz der Gewindemutter 6 mit den Flächen 6' in dieser Ausnehmung 7 gewährleistet ist.

Hervorzuheben ist noch, daß durch die Arretierung der inneren Fassung 3 gegen die äußere Fassung 4 mittels Arretierschraube 12 und Klemmstück 15 zugleich die Drehbarkeit der Bewegungsschraube 5 blockiert ist, so daß auch nicht etwa z.B. durch unbeabsichtigtes Berühren der Bewegungsschraube 5 eine Verschiebung der inneren Fassung 3 in der äußeren Fassung 4 und damit aus der gewählten Fokussierposition herbeigeführt werden kann. Der Kopf der Arretierschraube 12 kann wie der der Bewegungsschraube 5 zur Erleichterung der Drehbewegung bei der Betätigung ein seitlich gerändelter zylindrischer Schraubenkopf oder aber auch ein flaches flügelförmiges Betätigungsteil sein, oder er kann auch als üblicher Zylinder- oder Linsenschraubenkopf mit einem Schlitz zur Betätigung mittels eines Schraubenziehers oder einer Münze ausgebildet sein.

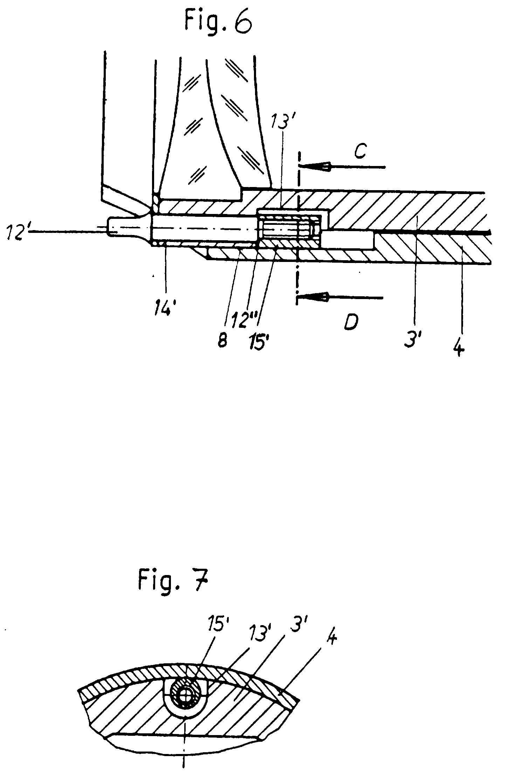

In den Fig. 6 und 7 ist eine vorteilhafte Variation des Klemmstücks veranschaulicht. Das Klemmstück ist hierbei, wie insbesondere aus Fig. 7 ersichtlich, als Klemmexzenter 15' ausgebildet. Entsprechend dem Ausführungsbeispiel der Fig. 1 ragt gemäß Fig. 6 die Arretierschraube 12' mit ihrem Schaft durch eine formschlüssige axiale Bohrung 14' in der inneren Fassung 3' in einen Raum, der durch eine äußere Ausnehmung 13' der inneren Fassung 3' in deren vorderem Bereich und die konzentrische innere Ausdrehung 8 der äußeren Fassung 4 gebildet wird. Der Schaft der Arretierschraube 12' weist an seinem inneren Endstück ein Außengewinde auf, auf das in dem vorerwähnten Raum der Klemmexzenter 15' aufgeschraubt ist. Dieser liegt mit seiner Stirnfläche an dem Bund 12'' am Schaft der Arretierschraube 12' an und ist an dieser Anlagefläche gegen Losdrehen bspw. mittels Kleber (Verklebens) gesichert und befestigt. Soll nun die innere Fassung 3' in einer bestimmten Position zur äußeren Fassung 4 arretiert werden, wird die Arretierschraube 12' mittels Drehens an ihrem Kopf betätigt, so daß der Klemmexzenter 15' gegen die radiale Wand der inneren Ausdrehung 8 der äußeren Fassung 4 gedrückt wird, wobei eine kraftschlüssige Verbindung zwischen innerer Fassung 3' und äußerer Fassung 4 hergestellt wird. Diese Endstellung ist in Fig. 6 und 7 gezeigt. Der Schaft der Arretierschraube 12' und die Bohrung 14' in der inneren Fassung 3' sind zur Bildung des Bundes 12'' an der Arretierschraube 12' im Bereich vor dem durch die äußere Ausnehmung 13' der inneren Fassung 3' und die innere Ausdrehung 8 der äußeren Fassung 4 gebildeten Raum im Durchmesser etwas größer ausgeführt als im Falle des Schaftes der Arretierschraube 12 und der Bohrung 14 der inneren Fassung 3 im Ausführungsbeispiel der Fig. 1.

## Patentansprüche

1. Anamorphotischer Vorsatz für ein Projektions-Grundobjektiv mit wenigstens einer vorderen, zum Zwecke der Fokussierung axial bewegbaren optischen Wirkungsgruppe (1) und einer hinteren ortsfesten optischen Wirkungsgruppe (2), wobei die vordere optische Wirkungsgruppe (1) in einer inneren zylindrischen Fassung (3) und die hintere optische Wirkungsgruppe (2) in einer feststehenden äußeren zylindrischen Fassung (4) gelagert sind und die innere zylindrische Fassung (3) teleskopartig in der äußeren zylindrischen Fassung (4) verschiebbar ist,
**dadurch gekennzeichnet,**
daß die Mittel (5, 6) zur Verschiebung der inneren zylindrischen Fassung (3) in der äußeren zylindrischen Fassung (4) sich axial erstrecken und in einen Wandbereich der inneren Fassung (3) eingelassen und von der Frontseite des Vorsatzes betätigbar sind.

2. Anamorphotischer Vorsatz nach Anspruch 1, dadurch gekennzeichnet, daß als Mittel zur Verschiebung der inneren Fassung (3) in der äußeren Fassung (4) eine in die innere Fassung (3) eingelassene Zug-Schub-Anordnung (5, 6) vorgesehen ist.

3. Anamorphotischer Vorsatz nach Anspruch 2, dadurch gekennzeichnet, daß die Zug-Schub-Anordnung durch eine Bewegungsschraube (5) und ein an der äußeren Fassung (4) festgelegtes Innengewinde gebildet ist, das mit dem Außengewinde des Schafts der Bewegungsschraube (5) in Wirkverbindung steht.

4. Anamorphotischer Vorsatz nach Anspruch 3, dadurch gekennzeichnet, daß das mit dem Außengewinde der Bewegungsschraube (5) zusammenwirkende Innengewinde Teil einer an der äußeren Fassung (4) befestigten Gewindemutter (6) ist.

5. Anamorphotischer Vorsatz nach Anspruch 3 oder 4, dadurch gekennzeichnet, daß die Bewegungsschraube (5) durch eine Bohrung (11) axial in die innere Fassung (3) eingelassen ist und mit ihrem Schaft in einen Raum ragt, der durch eine äußere Ausnehmung (7) in der inneren Fassung (3) und durch eine innere Ausdrehung (8) in der äußeren Fassung (4) gebildet wird, und daß in diesem Raum auch das an der äußeren Fassung (4) festgelegte Innengewinde (Gewindemutter 6) angeordnet ist.

6. Anamorphotischer Vorsatz nach einem der Ansprüche 3 bis 5, dadurch gekennzeichnet, daß die Bewegungsschraube (5) axial mittels eines Sicherungsrings (9) an der inneren Fassung (3) befestigt ist.

7. Anamorphotischer Vorsatz nach einem der Ansprüche 3 bis 6, dadurch gekennzeichnet, daß das Außengewinde des Schafts der Bewegungsschraube (5) und das an der äußeren Fassung (4) festgelegte Innengewinde (Gewindemutter 6) schwergängig ausgebildet sind.

8. Anamorphotischer Vorsatz nach einem der Ansprüche 1 bis 7, gekennzeichnet durch eine Arretiervorrichtung (12, 15) zur Arretierung der gewählten Fokussierposition der inneren Fassung (3) gegen die äußere Fassung (4).

9. Anamorphotischer Vorsatz nach Anspruch 8, dadurch gekennzeichnet, daß als Mittel zur Arretierung der inneren Fassung (3) gegen die äußere Fassung (4) eine in die innere Fassung (3) eingelassene Arretierschraube (12) dient, die mit dem Außengewinde ihres Schafts in Wirkverbindung mit einem Klemmstück (15) steht, das zur Herbeiführung der Arretierung gegen die äußere Fassung (4) zwingbar ist.

10. Anamorphotischer Vorsatz nach Anspruch 9, dadurch gekennzeichnet, daß das Klemmstück (15) zwischen die äußere (4) und die innere Fassung (3) zwingbar ist.

11. Anamorphotischer Vorsatz nach Anspruch 9 oder 10, dadurch gekennzeichnet, daß das Klemmstück (15) ein Innengewinde aufweist, mit dem das Außengewinde des Schafts der Arretierschraube (12) in Wirkverbindung steht.

12. Anamorphotischer Vorsatz nach einem der Ansprüche 9 bis 11, dadurch gekennzeichnet, daß die Arretierschraube (12) durch eine Bohrung (14) axial in die innere Fassung (3) eingelassen ist und mit ihrem Schaft in einen Raum ragt, der durch eine äußere Ausnehmung (13) in der inneren Fassung (3) und durch die innere Ausdrehung (8) der äußeren Fassung (4) gebildet wird, und daß in diesem Raum das Klemmstück (15) auf dem Ende der Arretierschraube (12) sitzt.

13. Anamorphotischer Vorsatz nach Anspruch 12, dadurch gekennzeichnet, daß das Klemmstück (15) bei nicht arretiertem Vorsatz mit Spiel zur inneren Fassung (3) und zur äußeren Fassung (4) auf dem Schaft der Arretierschraube (12) sitzt.

14. Anamorphotischer Vorsatz nach einem der Ansprüche 9 bis 13, dadurch gekennzeichnet, daß das Klemmstück (15) als Gewindemutter ausgebildet ist.

15. Anamorphotischer Vorsatz nach Anspruch 14, dadurch gekennzeichnet, daß die vordere Stirnfläche des Klemmstücks (15) zur optischen Achse geneigt ist und auf einer entsprechenden Schrägfläche der äußeren Ausnehmung (13) der inneren Fassung (3) aufliegt.

16. Anamorphotischer Vorsatz nach einem der Ansprüche 1 bis 15 oder 8 bis 15, dadurch gekennzeichnet, daß die Mittel (5, 6) zur Verschiebung der inneren Fassung (3) in der äußeren Fassung (4) im bezogen auf die Vertikale seitlichen (horizontalen) Bereich der inneren Fassung (3) und der äußeren Fassung (4) angeordnet sind.

17. Anamorphotischer Vorsatz nach einem der Ansprüche 8 bis 16, dadurch gekennzeichnet, daß die Arretiervorrichtung (12, 15) im bezogen auf die Vertikale seitlichen (horizontalen) Bereich der inneren Fassung (3) und der äußeren Fassung (4) angeordnet ist.

18. Anamorphotischer Vorsatz nach einem der Ansprüche 8 bis 17, dadurch gekennzeichnet, daß die Mittel (5, 6) zur Verschiebung der inneren Fassung (3) in der äußeren Fassung (4) und die Arretiervorrichtung (12, 15) einander in der Horizontalen diametral gegenüberliegend in den seitlichen Bereichen der inneren Fassung (3) und der äußeren Fassung (4) angeordnet sind.

19. Anamorphotischer Vorsatz nach einem der Ansprüche 1 bis 18, dadurch gekennzeichnet, daß die äußere Fassung (4) die innere Fassung (3) auch in deren Fokussierposition auf Unendlich an der Frontseite des Vorsatzes überragt (Fig. 5).

20. Anamorphotischer Vorsatz nach Anspruch 19, gekennzeichnet durch je eine konkave Ausnehmung (18) in der äußeren Fassung (4) an der Frontseite des Vorsatzes (Fig. 5).

21. Anamorphotischer Vorsatz nach Anspruch 20, dadurch gekennzeichnet, daß die konkaven Ausnehmungen (18) einander in der Horizontalen diametral gegenüberliegend angeordnet sind.

22. Anamorphotischer Vorsatz nach Anspruch 20 oder 21, dadurch gekennzeichnet, daß die konkaven Ausnehmungen (18) im Bereich der Mittel (5, 6) für die Verschiebung der inneren Fassung (3) in der äußeren Fassung (4) bzw. der Arretiervorrichtung (12, 15) vorgesehen sind.

23. Anamorphotischer Vorsatz nach einem der Ansprüche 20 bis 22, gekennzeichnet durch eine Entfernungsskala (in Metern und/oder Fuß) auf der äußeren Fassung (4) im Bereich wenigstens einer Ausnehmung (18).

24. Anamorphotischer Vorsatz nach Anspruch 23, dadurch gekennzeichnet, daß bei Einstellung der inneren Fassung (3) auf die gewählte Fokussierposition die Stellung der Frontseite der inneren Fassung (3) mit der zugehörigen Zahlenangabe der Entfernungsskala auf der äußeren Fassung (4) fluchtet.

25. Anamorphotischer Vorsatz nach einem der Ansprüche 1 bis 24, dadurch gekennzeichnet, daß die vordere optische Wirkungsgruppe (1) mittels elastischer Flanschverbindungen (10, 10) an der inneren Fassung (3) gehaltert ist.

26. Anamorphotischer Vorsatz nach einem der Ansprüche 1 bis 24 oder Anspruch 25, dadurch gekennzeichnet, daß die hintere optische Wirkungsgruppe (2) mittels einer elastischen Flanschverbindung (10', 10'; 10') an der äußeren Fassung (4) gehaltert ist.

27. Anamorphotischer Vorsatz nach Anspruch 25 oder 26, dadurch gekennzeichnet, daß die elastische/n Flanschverbindung/en als kreisscheibensegmentförmige (10, 10;. 10', 10') oder kreisringförmige (10') Metall- oder Kunststoffteile ausgebildet sind bzw. ist.

28. Anamorphotischer Vorsatz nach einem der Ansprüche 25 bis 27, dadurch gekennzeichnet, daß die elastische/n Flanschverbindung/en (10, 10; 10', 10'; 10') mittels axial durch die Flanschverbindung/en in die innere Fassung (3) und/bzw. in die äußere Fassung (4) eingelassener Schrauben (16) an der jeweiligen Fassung (3, 4) befestigt sind bzw. ist.

29. Anamorphotischer Vorsatz nach einem der Ansprüche 9 bis 11, dadurch gekennzeichnet, daß das Klemmstück als Klemmexzenter (15') ausgebildet ist.

30. Anamorphotischer Vorsatz nach Anspruch 29, dadurch gekennzeichnet, daß die Arretierschraube (12') durch eine Bohrung (14') axial in die innere Fassung (3') eingelassen ist und mit ihrem Schaft in einen Raum ragt, der durch eine äußere Ausnehmung (13') in der inneren Fassung (3') und durch die innere Ausdrehung (8) der äußeren Fassung (4) gebildet wird, und daß in diesem Raum der Klemmexzenter (15') mit seiner Stirnfläche an einem am Schaft der Arretierschraube (12') ausgebildeten Bund (12'') anliegt und befestigt ist.

## Claims

1. Anamorphotic front lens attachment for a projection ground objective with at least one frontal operational group (1), which is axially movable for the purpose of focusing, and a rear fixed optical operational group (2), and that the frontal optical operational group (1) is accommodated in an inner cylindrical frame (3), and the rear optical operational group (2) is accommodated in a fixed outer cylindrical frame (4), and the inner cylindrical frame (3) is telescopically displaceable in the outer cylindrical frame (4), **characterized in that** the means (5, 6) for displacement of the inner cylindrical frame (3) in the outer cylindrical frame (4) extent axially and are set into a wall section of the inner frame (3) and are operated from the front of the front lens attachment.

2. Anamorphotic front lens attachment according to Claim 1, **characterized in that** a push-pull arrangement (5, 6) which is inserted into the inner frame (3) is provided as a means of displacement of the inner frame (3) in the outer frame (4).

3. Anamorphotic front lens attachment according to Claim 2, **characterized in that** the push-pull arrangement is composed of a movement screw (5) and an internal thread set onto the outer frame (4) which is operational in conjunction with the external thread of a shaft of the adjustment screw (5).

4. Anamorphotic front lens attachment according to Claim 3, **characterized in that** the internal thread which co-operates with the external thread of the adjustment screw (5) is a part of a threaded nut (6) which is attached to the outer frame (4).

5. Anamorphotic front lens attachment according to Claim 3 or 4, **characterized in that** the adjustment screw (5) is set through a bore (11) axially into the inner frame (3) and extends with its shaft into a space which is formed by an extemal cutout (7) in the inner frame (3) and by an internal bore (8) in the external frame (4), and that this area also accommodates the internal thread (threaded nut 6) which is set onto the external frame (4).

6. Anamorphotic front lens attachment according to one of Claims 3 to 5, **characterized in that** the adjustment screw (5) is axially mounted on the inner frame (3) by means of a safety ring (9).

7. Anamorphotic front lens attachment according to one of Claims 3 to 6, **characterized in that** the external thread of the shaft of the adjustment screw (5) and the internal thread (threaded nut 6) set onto the external frame (4) are designed to be hard to move.

8. Anamorphotic front lens attachment according to one of Claims 1 to 7, **characterized by** an arresting device (12, 15) for arresting a chosen focusing position of the inner frame (3) towards the external frame (4).

9. Anamorphotic front lens attachment according to Claim 8, **characterized in that** an arresting screw (12), which is set into the inner frame (3) and which is in operational contact with the external thread of its shaft by means of a clamping element (15) which is forced to establish an arrest towards the external frame (4), serves as an arresting means of the inner frame (3) towards the outer frame (4).

10. Anamorphotic front lens attachment according to Claim 9, **characterized in that** the clamping element (15) is forced between the external (4) and the internal frame (3).

11. Anamorphotic front lens attachment according to Claim 9 or 10, **characterized in that** the clamping element (15) comprises an internal thread which is operationally connected to the external thread of the shaft of the arresting screw (12).

12. Anamorphotic front lens attachment according to one of Claims 9 to 11, **characterized in that** the arresting screw (12) is axially set through a bore (14) into the internal frame (3) and extends with its shaft into a space which is formed by an external cutout (13) in the internal frame (3) and by the inner bore (8) of the outer frame (4), and that the clamping element (15) is seated in said space on the end of the arresting screw (12).

13. Anamorphotic front lens attachment according to Claim 12, **characterized in that** the clamping element (15) with a non-arrested front lens attachment is seated with play towards the inner frame (3) and towards the outer frame (4) on the shaft of the arresting screw (12).

14. Anamorphotic front lens attachment according to one of Claims 9 to 13, **characterized in that** the clamping element (15) is a threaded nut.

15. Anamorphotic front lens attachment according to Claim 14, **characterized in that** the front end of the clamping element (15) is slanted towards the optical axis and seated on a corresponding slanted surface of the outer cutout (13) of the inner frame (3).

16. Anamorphotic front lens attachment according to one of Claims 1 to 15 or 8 to 15, **characterized in that** the means (5, 6) for displacement of the inner frame (3) in the outer frame (4) are arranged, relative to the vertical, in the lateral (horizontal) area of the inner frame (3) and the outer frame (4).

17. Anamorphotic front lens attachment according to one of Claims 8 to 16, **characterized in that** the arresting device (12, 15) is arranged, relative to the vertical, in the lateral (horizontal) area of the inner frame (3) and the outer frame (4).

18. Anamorphotic front lens attachment according to one of Claims 8 to 17, **characterized in that** the means (5, 6) for displacement of the inner frame (3) in the outer frame (4) and the arresting device (12, 15) are arranged horizontally diametrally opposite each other in the lateral areas of the inner frame (3) and the outer frame (4).

19. Anamorphotic front lens attachment according to one of Claims 1 to 18, **characterized in that** the outer frame (4) protrudes the inner frame (3) even in its focusing position of infinite over the front of the front lens attachment (Fig. 5.).

20. Anamorphotic front lens attachment according to Claim 19, **characterized by** a respective concave cutout (18) in the outer frame (4) at the front of the front lens attachment (Fig. 5).

21. Anamorphotic front lens attachment according to Claim 20, **characterized in that** the concave cutouts (18) are arranged in the horizontal diametrically opposite each other.

22. Anamorphotic front lens attachment according to Claim 20 or 21, **characterized in that** the concave cutouts (18) in the area of the means for displacement of the inner frame (3) are provided for displacement of the inner frame (3) in the outer frame (4) or in the arresting device (12, 15).

23. Anamorphotic front lens attachment according to one of Claims 20 to 22, **characterized by** a range dial (in metres and/or feet) on the outer frame (4) in the area of at least one cutout (18).

24. Anamorphotic front lens attachment according to Claim 23, **characterized in that** when setting the inner frame (3) to a chosen focusing position, the position of the front of the inner frame (3) is aligned with the associated number display of the range dial on the outer frame (4).

25. Anamorphotic front lens attachment according to one of Claims 1 to 24, **characterized in that** the front optical operational group (1) is supported on the inner frame (3) by means of elastic flange connections (10, 10).

26. Anamorphotic front lens attachment according to one of Claims 1 to 24 or Claim 25, **characterized in that** the rear optical operational group (2) is supported on the outer frame (4) by means of an elastic flange connection (10', 10'; 10').

27. Anamorphotic front lens attachment according to Claim 25 or 26, **characterized in that** the elastic flange connection/s is/are designed in the shape of circular disc segments (10, 10; 10', 10') or circular ringshaped (10') metal or plastic parts.

28. Anamorphotic front lens attachment according to one of Claims 25 to 27, **characterized in that** the elastic flange connection/s (10, 10; 10', 10'; 10') is/are mounted on a respective frame (3, 4) by means of bolts (16) which are set in the inner frame (3) and/or in the outer frame (4).

29. Anamorphotic front lens attachment according to one of Claims 9 to 11, **characterized in that** the clamping element is designed as a clamping eccenter (15').

30. Anamorphotic front lens attachment according to Claim 29, **characterized in that** the arresting screw (12') is set through a bore (14') axially into the inner frame (3') and extends with its shaft into an area which is established by the outer cutout (13') in the inner frame (3') and by the inner bore (8) of the outer frame (4), and that in said area the clamping eccenter (15') is seated with its end surface on, and mounted to a collar (12") which is formed on the shaft of the arresting screw (12').

## Revendications

1. Anamorphoseur pour un objectif de projection de base, comportant au moins une unité d'action optique avant (1) mobile axialement pour la focalisation, et une unité d'action optique arrière (2) fixe, l'unité d'action optique avant (1) étant montée dans une monture cylindrique intérieure (3) tandis que l'unité d'action optique arrière (2) est montée dans une monture cylindrique extérieure fixe (4), et la monture cylindrique intérieure (3) coulissant de manière télescopique dans la monture cylindrique extérieure (4),
caractérisé en ce que les moyens (5, 6) prévus pour le coulissement de la monture cylindrique intérieure (3) dans la monture cylindrique extérieure (4) s'étendent axialement, sont encastrés dans une zone de paroi de la monture intérieure (3) et sont aptes à être actionnés par le côté frontal de l'anamorphoseur.

2. Anamorphoseur selon la revendication 1, caractérisé en ce qu'il est prévu, comme moyens pour le coulissement de la monture intérieure (3) dans la monture extérieure (4), un dispositif de traction et de poussée (5, 6) qui est encastré dans la monture intérieure (3).

3. Anamorphoseur selon la revendication 2, caractérisé en ce que le dispositif de traction et de poussée est formé par une vis de déplacement (5) et un filetage intérieur, fixé à la monture extérieure (4), qui est en relation fonctionnelle avec le filetage extérieur de la tige de la vis de déplacement (5).

4. Anamorphoseur selon la revendication 3, caractérisé en ce que le filetage intérieur qui coopère avec le filetage extérieur de la vis de déplacement (5) fait partie d'un écrou fileté (6) fixé à la monture extérieure (4).

5. Anamorphoseur selon la revendication 3 ou 4, caractérisé en ce que la vis de déplacement (5) est introduite axialement dans la monture intérieure (3) par un perçage (11) et dépasse, avec sa tige, dans un espace qui est défini par un creux extérieur (7) prévu dans la monture intérieure (3) et par un creux intérieur (8) réalisé au tour dans la monture extérieure (4), et en ce que le filetage intérieur (écrou fileté 6) fixé à la monture extérieure (4) est également disposé dans cet espace.

6. Anamorphoseur selon l'une des revendications 3 à 5, caractérisé en ce que la vis de déplacement (5) est fixée axialement à la monture intérieure (3) à l'aide d'une bague d'arrêt (9).

7. Anamorphoseur selon l'une des revendications 3 à 6, caractérisé en ce que le filetage extérieur de la tige de la vis de déplacement (5) et le filetage intérieur (écrou fileté 6) fixé à la monture extérieure (4) sont conçus pour une coopération serrée.

8. Anamorphoseur selon l'une des revendications 1 à 7, caractérisé par un dispositif d'arrêt (12, 15) destiné à arrêter la position de focalisation choisie pour la monture intérieure (3) par rapport à la monture extérieure (4).

9. Anamorphoseur selon la revendication 8, caractérisé en ce que les moyens prévus pour arrêter la monture intérieure (3) par rapport à la monture extérieure (4) sont formés par une vis d'arrêt (12), encastrée dans la monture intérieure (3), dont le filetage extérieur de la tige est en relation fonctionnelle avec une pièce de serrage (15) qui est apte à être appliquée par force contre la monture extérieure (4) pour provoquer l'arrêt.

10. Anamorphoseur selon la revendication 9, caractérisé en ce que la pièce de serrage (15) est apte à être appliquée par force entre la monture extérieure (4) et la monture intérieure (3).

11. Anamorphoseur selon la revendication 9 ou 10, caractérisé en ce que la pièce de serrage (15) comporte un filetage intérieur avec lequel le filetage extérieur de la tige de la vis d'arrêt (12) est en relation fonctionnelle.

12. Anamorphoseur selon l'une des revendications 9 à 11, caractérisé en ce que la vis d'arrêt (12) est introduite axialement dans la monture intérieure (3) par un perçage (14) et dépasse, avec sa tige, dans un espace qui est défini par un creux extérieur (13) prévu dans la monture intérieure (3) et par le creux intérieur (8) réalisé au tour dans la monture extérieure (4), et en ce que dans cet espace, la pièce de serrage (15) est logée sur l'extrémité de la vis d'arrêt (12).

13. Anamorphoseur selon la revendication 12, caractérisé en ce que, quand l'anamorphoseur n'est pas arrêté, la pièce de serrage (15) est logée sur la tige de la vis d'arrêt (12) avec du jeu par rapport à la monture intérieure (3) et à la monture extérieure (4).

14. Anamorphoseur selon l'une des revendications 9 à 13, caractérisé en ce que la pièce de serrage (15) est conçue comme un écrou fileté.

15. Anamorphoseur selon la revendication 14, caractérisé en ce que la surface frontale avant de la pièce de serrage (15) est inclinée vers l'axe optique et repose sur une surface inclinée correspondante du creux extérieur (13) de la monture intérieure (3).

16. Anamorphoseur selon l'une des revendications 1 à 15 ou 8 à 15, caractérisé en ce que les moyens (5, 6) prévus pour le coulissement de la monture intérieure (3) dans la monture extérieure (4) sont disposés dans la zone (horizontale) latérale, par rapport à la verticale, de la monture intérieure (3) et de la monture extérieure (4).

17. Anamorphoseur selon l'une des revendications 8 à 16, caractérisé en ce que le dispositif d'arrêt (12, 15) est disposé dans la zone (horizontale) latérale, par rapport à la verticale, de la monture intérieure (3) et de la monture extérieure (4).

18. Anamorphoseur selon l'une des revendications 8 à 17, caractérisé en ce que les moyens (5, 6) prévus pour le coulissement de la monture intérieure (3) dans la monture extérieure (4) et le dispositif d'arrêt (12, 15) sont disposés dans les zones latérales de la monture intérieure (3) et de la monture extérieure (4) en étant diamétralement opposés, à l'horizontale.

19. Anamorphoseur selon l'une des revendications 1 à 18, caractérisé en ce que la monture extérieure (4) dépasse de la monture intérieure (3) même quand celle-ci est focalisée à l'infini, au niveau du côté frontal de l'anamorphoseur (fig. 5).

20. Anamorphoseur selon la revendication 19, caractérisé par des creux concaves (18) prévus dans la monture extérieure (4), au niveau du côté frontal de l'anamorphoseur (fig. 5).

21. Anamorphoseur selon la revendication 20, caractérisé en ce que les creux concaves (18) sont diamétralement opposés, à l'horizontale.

22. Anamorphoseur selon la revendication 20 ou 21, caractérisé en ce que les creux concaves (18) sont disposés dans la zone des moyens (5, 6) prévus pour le coulissement de la monture intérieure (3) dans la monture extérieure (4) ou du dispositif d'arrêt (12, 15).

23. Anamorphoseur selon l'une des revendications 20 à 22, caractérisé par une graduation de distance (en mètres et/ou en pieds) sur la monture extérieure (4), dans la zone d'au moins un creux (18).

24. Anamorphoseur selon la revendication 23, caractérisé en ce que lors du réglage de la monture intérieure (3) sur la position de focalisation choisie, la position du côté frontal de la monture intérieure (3) est dans l'alignement de l'indication numérique correspondante de la graduation de distance prévue sur la monture extérieure (4).

25. Anamorphoseur selon l'une des revendications 1 à 24, caractérisé en ce que l'unité d'action optique avant (1) est fixée à la monture intérieure (3) à l'aide de raccords à brides élastiques (10, 10).

26. Anamorphoseur selon l'une des revendications 1 à 24 ou 25, caractérisé en ce que l'unité d'action optique arrière (2) est fixée à la monture extérieure (4) à l'aide d'un raccord à bride élastique (10', 10' 10').

27. Anamorphoseur selon la revendication 25 ou 26, caractérisé en ce que le ou les raccords à brides élastiques sont conçus comme des pièces en métal ou en matière plastique en forme de segments de disques (10, 10 ; 10', 10') ou en forme de couronnes (10').

28. Anamorphoseur selon l'une des revendications 25 à 27, caractérisé en ce que le ou les raccords à brides élastiques (10, 10 ; 10', 10' ; 10') sont fixés à la monture correspondante (3, 4) à l'aide de vis (16) qui sont introduites dans la monture intérieure (3) et/ou dans la monture extérieure (4) axialement à travers le ou les raccords à brides.

29. Anamorphoseur selon l'une des revendications 9 à 11, caractérisé en ce que la pièce de serrage est conçue comme un excentrique de serrage (15').

30. Anamorphoseur selon la revendication 29, caractérisé en ce que la vis d'arrêt (12') est introduite axialement dans la monture intérieure (3') par un perçage (14') et dépasse, avec sa tige, dans un espace qui est défini par un creux extérieur (13') prévu dans la monture intérieure (3') et par le creux intérieur (8) réalisé au tour dans la monture extérieure (4), et en ce que dans cet espace, l'excentrique de serrage (15') est appliqué et fixé avec sa surface frontale contre une collerette (12") formée sur la tige de la vis d'arrêt (12').
